# FASCICULE DE BREVET EUROPEEN

(11) **EP 2 519 407 B1**
(45) Date de publication et mention de la délivrance du brevet: **19.06.2019**
(21) Numéro de dépôt: 10807628.2
(22) Date de dépôt: 20.12.2010
(51) Int. Cl.: B32B 17/10, B60J 1/00, C03C 27/12

(54) **VITRAGE A FAIBLE NIVEAU DE DOUBLE IMAGE**
GLASPLATTE MIT GERINGEM DOPPELBILD
GLAZING WITH LOW LEVEL OF DOUBLE IMAGE

(30) Priorité: 30.11.2010 FR 1059915; 16.02.2010 FR 1051076; 31.12.2009 FR 0959695
(43) Date de publication de la demande: 07.11.2012
(73) Titulaire: Saint-Gobain Glass France, 92400 Courbevoie (FR)
(72) Inventeur: THELLIER, Hervé, F-60170 Pimprez (FR); LE MOAL, Simon, F-75010 Paris (FR); MARGUERITE, Cédric, F-60170 Saint-Leger-Aux-Bois (FR)
(74) Mandataire: Saint-Gobain Recherche
(86) Numéro de dépôt international: PCT/FR2010/052815
(87) Numéro de publication internationale: WO 2011/080464

(56) Documents cités:
- WO-A1-2011/052311
- DE-A1-102008 008 758
- US-A- 5 812 332

## Description

L'invention concerne le domaine des vitrages, notamment automobiles, à faible niveau de double-image.

Les vitrages automobile, notamment du type pare-brise ou lunette arrière doivent présenter un minimum de défauts optiques pour des raisons de sécurité et pour des raisons esthétiques. La vision du conducteur doit être la plus claire possible et il n'est notamment pas tolérable que l'image qu'il perçoit de l'environnement de la voiture soit dédoublée. La multiplication de l'image vue par le conducteur à travers le pare-brise est un phénomène connu venant de réflexions multiples aux interfaces air/verre. On parle généralement de double image même si en théorie d'autres images supplémentaires existent car ces images supplémentaires sont de très faible intensité. Une réflexion supplémentaire s'accompagne en effet d'une perte d'intensité importante de l'image parasite, de l'ordre d'un facteur 100 par rapport à l'intensité de l'image principale. L'importance du phénomène est accentuée par l'inclinaison du vitrage.

On sait calculer par ordinateur le niveau de double image théorique, lequel est exprimé par l'homme du métier par un chiffre en minutes. Ce niveau dépend de nombreux facteurs comme la variation d'épaisseur du pare-brise, l'épaisseur des feuilles constituant le pare-brise, de la courbure locale, mais aussi de l'angle de vision à travers le vitrage. On distingue le niveau de double-image vertical (les images apparaissent l'une au-dessus de l'autre quand on est assis dans le véhicule) du niveau de double-image horizontal (les images apparaissent l'une à côté de l'autre quand on est assis dans le véhicule). Des pare-brise de formes de plus en plus complexes sont élaborés pour des raisons esthétiques et fonctionnelles, qui seront vues dans la suite. Ces formes complexes génèrent de la double-image verticale, mais peuvent aussi amplifier des problèmes de double-image horizontale dans certaines configurations, par exemple dans des zones de retours latéraux à rayons de courbure faibles (pare-brise panoramique ...), l'inclinaison de la normale au pare-brise par rapport à l'angle de vision étant un facteur aggravant.

La mesure du niveau de double-image peut être réalisée par la technique de mesure à la cible (en anglais : « Target test ») ou la technique du test au collimateur (en anglais : « collimation-telescope test ») comme décrites dans le règlement N° 43, additif 42, de l'accord E/ECE/324, E/ECE/TRANS/505, concernant l'adoption de prescriptions techniques uniformes applicables aux véhicules à roues, aux équipements et aux pièces susceptibles d'être montés ou utilisés sur un véhicule à roues et les conditions de reconnaissance réciproque des homologations délivrées conformément à ces prescriptions.

Les constructeurs automobiles, notamment français, conçoivent des modèles aux formes toujours plus innovantes. Notamment, les pare-brise dessinés peuvent être très grands puisqu'ils prennent parfois même une partie du toit en venant au-dessus des passagers aux places avant. Ces pare-brise sont également de plus en plus inclinés vers l'horizontale. Par ailleurs, leurs courbures doivent être très régulières pour bien se fondre dans l'allure générale de la voiture. On souhaite en particulier que le pare-brise soit en continuité avec les piliers de la carrosserie. De plus, dans un souci de sécurité, on cherche à élargir la zone de vision, notamment latérale. Dans ce but, on a tendance à la fois à diminuer la largeur des piliers de la carrosserie, voire les reculer ou les supprimer, et prolonger les bords latéraux du pare-brise vers l'arrière.

L'invention traite en particulier du problème de double image horizontale sur les côtés de pare-brise panoramiques ou vitrages feuilletés de formes similaires, présentant des retours latéraux, notamment à courbures prononcées, ce problème de double image étant accru, comme précisé ci-dessus, d'autant plus que le vitrage est incliné par rapport au plan vertical. Dans cet exposé comme dans les techniques normalisées de mesure du niveau de double image mentionnées précédemment, l'angle de vision est supposé de direction horizontale dans le cas d'un pare-brise, mais le problème de double image particulier de l'invention est transposable à tout autre angle de vision, notamment celui du conducteur et celui du passager, fixés par les constructeurs automobiles de directions non horizontales.

Les inventeurs ont donc cherché à résoudre le problème de double image horizontale à la fois telle que mesurée par les techniques normalisées et telle que perçue par le conducteur et le passager (en position de montage d'un pare-brise panoramique par exemple).

Ils ont atteint leur but par l'invention qui a pour objet un vitrage feuilleté comprenant deux feuilles de verre reliées par une couche adhésive intercalaire et se distinguant par le fait que dans une direction au moins, l'épaisseur de la couche adhésive intercalaire est successivement croissante et décroissante.

Les feuilles de verre constituant le vitrage feuilleté peuvent être minérales, en verre flotté, ou organiques en matériau polymère transparent tel que polycarbonate (PC), poly(méthacrylate de méthyle) (PMMA), résine ionomère ...

La couche adhésive intercalaire est de manière connue constituée de polyvinylbutyral (PVB), polyuréthane (PU) ... Cette couche est ici de forme complexe à épaisseur successivement croissante et décroissante ou décroissante et croissante, de telle manière que la double image vue à travers un vitrage de géométrie complexe est atténuée.

L'épaisseur de l'adhésif intercalaire peut croître puis décroître sur une faible distance, par exemple à proximité du bord dans une zone latérale de retour ou à courbure prononcée, et/ou sur toute la longueur du pare-brise, par exemple croître dans une zone latérale gauche puis décroître dans une zone latérale droite.

L'amplitude de la variation d'épaisseur de l'intercalaire dans le vitrage feuilleté est au sens de l'invention d'au moins 0,1 mm.

De préférence l'épaisseur de la couche adhésive intercalaire dans le vitrage feuilleté est une fonction continue dans toutes les directions. Un profil de cette épaisseur en escalier ou gradin est alors exclu. Cette continuité de l'épaisseur de l'intercalaire dans le vitrage feuilleté final n'exclut cependant pas des irrégularités de surface de dimensions jusqu'à 100 µm et/ou une rugosité de l'intercalaire avant assemblage du feuilleté connues dans ce domaine pour favoriser l'évacuation de l'air résiduel qui se situe aux deux interfaces verre/intercalaire lors du processus d'assemblage (dégazage). Ces irrégularités, cette rugosité sont détruites par le fluage de l'adhésif thermoplastique pendant l'assemblage.

Dans une zone de bord du vitrage au moins, l'épaisseur de la couche adhésive intercalaire est croissante à distance croissante du bord du vitrage. Il s'agit en particulier d'une zone de bord latérale à courbure plus ou moins prononcée, telle qu'une zone de retour latéral d'un pare-brise panoramique. Dans cette réalisation particulière, l'épaisseur de l'adhésif intercalaire peut être constante au bord du vitrage, puis ne devenir croissante qu'à faible distance ou proximité de celui-ci, notamment de 30 à 350 mm du bord du vitrage.

Selon une variante préférée, dans deux zones de bord opposées du vitrage, l'épaisseur de la couche adhésive intercalaire est croissante à distance croissante du bord du vitrage, ces deux zones de bord étant séparées par une zone à épaisseur constante de la couche adhésive intercalaire. Ainsi, dans la direction d'une section du vitrage reliant lesdites deux zones de bord opposées, l'épaisseur de la couche adhésive intercalaire est alternativement croissante, constante et décroissante. Lesdites deux zones de bord opposées sont alors par exemple les deux zones latérales d'un pare-brise panoramique, dans sa position de montage.

Selon l'invention, les zones de la couche adhésive intercalaire à épaisseur variable forment par exemple un angle au moins égal à 0,05, de préférence 0,1 et de manière particulièrement préférée 0,15 mrad, et au plus égal à 5, de préférence 2 mrad.

Les dimensions du vitrage feuilleté de l'invention, mesurées en trois dimensions c'est-à-dire en suivant la forme complexe (courbure) du vitrage, sont de préférence celles d'un pare-brise panoramique : longueur comprise entre 1 et 2,5 m, et largeur entre 0,4 et 2 m. Le vitrage peut être sensiblement carré, avec longueur et largeur du même ordre.

Selon la variante privilégiée de l'invention, le vitrage feuilleté présente un rayon de courbure minimal d'au plus 500 mm, ou un angle d'accostage d'au moins 35°. Ces caractéristiques englobent de nombreux vitrages de géométries complexes suscitées par de nouvelles exigences esthétiques et la recherche de nouvelles fonctionnalités, et notamment les pare-brise panoramiques. Avec de telles caractéristiques le problème de double image horizontale se pose avec particulièrement d'acuité.

Un rayon de courbure d'au plus 500 mm correspond à une courbure prononcée, présente par exemple en zones latérales.

Pour définir l'angle d'accostage, on considère le plan médian (éventuellement de symétrie) longitudinal du pare-brise, ainsi que la corde C reliant les deux extrémités du vitrage incluses dans ce plan médian longitudinal. En tout point P de cette corde C, on peut définir un plan perpendiculaire à C et dont l'intersection avec le pare-brise donne une section S(P) de vitrage. Chaque section S(P) forme une courbe dont les extrémités correspondent à deux points M et M' situés sur les deux bords latéraux opposés du vitrage (l'un est le bord latéral côté conducteur et l'autre est le bord latéral côté passager). La corde D de la section S(P) correspond donc au segment [MM']. L'angle d'accostage en un point M du bord latéral du vitrage est l'angle que forme la tangente à la section S(P) en M avec la corde D.

De façon plus générale, l'angle d'accostage du pare-brise est l'angle d'accostage de la section S(P) dont la longueur de la corde D associée est la plus grande.

Un angle d'accostage d'au moins 35° traduit une courbure globale importante du vitrage (dans toute sa dimension transversale) et/ou des retours latéraux combinés à une courbure prononcée en zones latérales.

Le vitrage feuilleté de l'invention peut être bombé selon deux directions orthogonales entre elles et posséder alors deux profondeurs de bombage. L'homme du métier du vitrage automobile désigne par « flèche », la plus grande profondeur de bombage transversal (par rapport au véhicule automobile). Il désigne par double-bombage la plus grande profondeur de bombage longitudinal (par rapport au véhicule automobile).

Le vitrage feuilleté selon l'invention présente une flèche comprise entre 150 et 500 mm. Pour de telles valeurs au moins égales à 150 mm, le problème de double image horizontale se pose particulièrement.

C'est cependant aussi le cas de vitrages feuilletés de flèche inférieure à 150 mm mais au moins égale à 50 mm, et présentant localement un bombage prononcé. De tels vitrages ne sont pas dans la portée de l'invention.

Le vitrage feuilleté de l'invention présente d'autre part avantageusement un double bombage compris entre 0 et 180 mm.

Le vitrage feuilleté de l'invention est fréquemment symétrique dans sa géométrie générale, il peut alors notamment comporter un plan médian de symétrie.

Cependant, dans une réalisation particulière, le vitrage feuilleté est asymétrique, de manière adaptée à un environnement de montage de géométrie asymétrique. La surface en trois dimensions de ce vitrage (par exemple sa surface extérieure) ne présente pas de plan de symétrie, à cause du galbe de cette forme ou bien de son contour.

Par analogie, notons que l'épaisseur de la couche adhésive intercalaire du vitrage feuilleté de l'invention est elle-même fréquemment symétrique par rapport au plan médian de symétrie précité. Dans le cas d'une géométrie symétrique du vitrage, la symétrie d'épaisseur de l'intercalaire peut offrir avantageusement la possibilité de constituer celui-ci à partir de deux moitiés identiques, initialement positionnées symétriquement l'une de l'autre par rapport au plan médian de symétrie.

Lorsqu'au contraire, le vitrage feuilleté n'est pas de géométrie symétrique, l'épaisseur de l'intercalaire peut néanmoins conserver cette symétrie par rapport au plan médian. Ainsi la double image est-elle corrigée au bord latéral côté conducteur pour celui-ci, et au bord latéral côté passager pour celui-ci de manière analogue.

Cependant, dans une réalisation particulière, on peut s'attacher à corriger la double image côté conducteur et côté passager de manière privilégiée pour le conducteur (quitte à dégrader la correction pour le passager). Alors, selon cette variante la couche adhésive intercalaire dans le vitrage feuilleté est asymétrique en épaisseur. Dans ce cas, lorsque la géométrie du vitrage feuilleté est symétrique, l'intercalaire est utilisable indifféremment pour les montages de pare-brise de véhicules à conduite à gauche ou à droite : il suffit pour passer de l'un à l'autre de retourner l'intercalaire avant l'assemblage du feuilleté.

D'autre part il doit être indiqué que le problème de double image est diminué en diminuant l'épaisseur globale du vitrage feuilleté, donc de chacune de ses feuilles constitutives. Dans cette perspective le vitrage feuilleté de l'invention comprend des feuilles de verre d'épaisseurs non nécessairement égales, l'emploi d'une feuille de verre plus fine qu'une autre (par exemple 1,4 mm au lieu de 2,1 mm) étant avantageux.

L'invention a par ailleurs pour objet un véhicule de transport, bâtiment ou toute structure incorporant un vitrage feuilleté décrit ci-dessus, l'épaisseur de la couche adhésive intercalaire n'étant pas constante dans au moins deux zones de bord latérales sensiblement opposées du vitrage, dans sa position de montage. Il s'agit en particulier d'un véhicule automobile incorporant un pare-brise panoramique.

Selon une caractéristique préférée de ce véhicule de transport, ce bâtiment ou cette structure, le vitrage feuilleté présente, en position de montage, un plan médian de symétrie vertical, et la corde reliant les deux points d'intersection de ce plan avec le bord du vitrage, est inclinée d'au moins 15 et au plus 90, de préférence 50° par rapport à l'horizontale.

D'autres objets de l'invention consistent en
- un premier procédé de fabrication d'un vitrage feuilleté décrit précédemment, comprenant la préparation par extrusion d'une couche adhésive intercalaire d'épaisseur non constante ; l'extrusion est en effet parfaitement adaptée à la réalisation de feuilles de matière plastique à gradient d'épaisseurs complexe, en particulier à deux zones disjointes, voire éloignées l'une de l'autre, dont chacune a un gradient d'épaisseurs ; l'intégralité de la couche adhésive intercalaire est réalisable par extrusion, en une partie ou en plusieurs, à la manière d'une mosaïque ; en position de montage du vitrage, une variation d'épaisseur de la couche adhésive intercalaire est alors avantageusement observée selon une section transversale (plutôt que longitudinale) par rapport au véhicule ou autre environnement de montage ;
- un second procédé de fabrication d'un vitrage feuilleté décrit précédemment, comprenant la préparation par thermoformage d'une couche adhésive intercalaire d'épaisseur non constante ; cette technique procure une excellente réduction de double image ;
- l'application d'un vitrage feuilleté décrit ci-dessus pour un véhicule de transport terrestre, aérien ou aquatique, notamment comme pare-brise, lunette arrière, vitre latérale ou toit de véhicule automobile, pour le bâtiment, le mobilier urbain (abribus, panneau d'affichage ...), l'aménagement intérieur (mobilier, cloison, cabine de douche, aquarium ...), l'électroménager (tablette de réfrigérateur ...), l'électronique (écran de télévision, ordinateur...).

L'invention est illustrée par les exemples suivants.

### Exemple 1

Deux pare-brise panoramiques sont réalisés par assemblage de deux feuilles de verre flotté de 2,1 mm d'épaisseur, de 1491 mm de longueur et 693 mm de largeur, au moyen d'une couche adhésive intercalaire de polyvinylbutyral. La longueur et la largeur sont ici mesurées en deux dimensions : elles représentent les plus grandes cordes reliant deux bords opposés du vitrage, dans deux directions perpendiculaires.

Ces pare-brise panoramiques de géométrie identique présentent
- une flèche de 310 mm,
- un double bombage de 9,2 mm,
- un rayon de courbure minimal de 182 mm, atteint dans les deux zones de bord latérales opposées,
- et un angle d'accostage de 69,2°.

Ces pare-brise présentent un plan médian de symétrie (vertical et longitudinal en position de montage, par rapport au véhicule). L'inclinaison par rapport à l'horizontale de la corde reliant les deux points du bord du vitrage appartenant à ce plan médian est de 39,53° en position de montage.

Les deux pare-brise ne diffèrent que par l'épaisseur constante (0,76 mm) de la couche de PVB de l'un, tandis que l'autre présente une épaisseur croissante de ses bords latéraux (à partir d'une valeur de 0,76 mm) jusqu'au plan médian de symétrie, de telle manière que cette épaisseur forme un angle de 0,49 mrad.

La mesure de double image est réalisée au moyen d'un laser orienté conformément au règlement n° 43, additif 42 de l'accord E/ECE/324, E/ECE/TRANS/505 déjà cité. Les images ponctuelles primaires et secondaires sont mesurées sur un écran distant de 7 m du vitrage ; les résultats sont exprimés en minutes.

Des zones A, B et C sont délimitées sur le vitrage, également conformément au règlement précité.

Les résultats sont consignés dans le tableau 1 pour le pare-brise à PVB standard, dans le tableau 2 pour le pare-brise à PVB à épaisseur variable.

**Tableau 1 : double image avec PVB standard**

| Hauteur | Bord zone B conducteur | Bord zone A conducteur | Côté conducteur |
|---|---|---|---|
| Haut B | 31,5 | | 9,6 |
| Haut A | | 18,3 | 11,6 |
| Milieu | 21,7 | 18,4 | 9,3 |
| Bas A | | 18,1 | 8,9 |
| Bas B | 18,3 | | 12,6 |

**Tableau 2 : double image avec PVB en coin (0,49 mrad)**

| Hauteur | Bord zone B conducteur | Bord zone A conducteur | Côté Conducteur |
|---|---|---|---|
| Haut B | 26,8 | | 8,9 |
| Haut A | | 14,9 | 10,4 |
| Milieu | 21,3 | 13,1 | 4,3 |
| Bas A | | 16,2 | 4,8 |
| Bas B | 17,2 | | 6,9 |

Les mesures sont effectuées à différentes hauteurs le long de lignes verticales.

Bord zone B conducteur signifie : limite latérale côté conducteur entre zone B et zone C.

Bord zone A conducteur signifie : limite latérale côté conducteur entre zone A et zone B.

Côté conducteur signifie : milieu de la moitié côté conducteur de la zone A.

On vérifie que, grâce à l'invention, la double image est diminuée.

### Exemple 2

On reproduit l'exemple précédent en utilisant comme adhésif intercalaire :
- sur chacun des deux bords latéraux du vitrage, une bande de PVB de 30 cm de large, d'épaisseur variant de 0,38 à 0,76 mm du bord latéral du vitrage vers son centre, et obtenue comme décrit ci-dessous, et
- dans la partie médiane du vitrage, une feuille de PVB de 0,76 mm d'épaisseur constante.

Les deux bandes de PVB d'épaisseur variable sont obtenues par thermoformage, étirage localisé de la manière suivante.

L'opération se déroule en salle blanche à 16 °C et 35 % d'humidité.

On chauffe une feuille de PVB standard de 0,76 mm d'épaisseur d'une température de 15 °C à 120 °C. Cette feuille est tendue horizontalement entre deux moyens de préhension.

L'étirage local du PVB est obtenu par la montée d'un moule (solide) à 25 °C caractérisé par une forme présentant un angle de 40 ° par rapport à l'horizontale. Le moule entre ainsi progressivement en contact avec la feuille de PVB, dont l'épaisseur se fige à sa valeur à l'entrée en contact avec le moule. Ainsi obtient-on une bande de PVB de 30 cm de large et d'épaisseur comprise entre 0,38 et 0,76 mm. La température mesurée du PVB après thermoformage en contact avec le moule est de 70 °C.

Cette variation d'épaisseur de la feuille de PVB se retrouve à l'identique dans le feuilleté assemblé dans les conditions usuelles, comprenant notamment un chauffage du PVB à une température approximative de 145 °C.

La double image mesurée en bord zone A conducteur - milieu est de 7,8 minutes.

La technique employée ici d'étirage localisé du PVB par thermoformage se révèle donc excellente pour limiter le phénomène de double image.

## Revendications

1. Vitrage feuilleté comprenant deux feuilles de verre reliées par une couche adhésive intercalaire, présentant en position de montage un bord supérieur, un bord inférieur et deux bords latéraux, **caractérisé en ce qu'**il présente des retours latéraux à courbures prononcées de rayons de courbure d'au plus 500 mm, **en ce que** dans la direction horizontale en position de montage, l'épaisseur de la couche adhésive intercalaire est successivement croissante et décroissante, et **en ce que** le vitrage feuilleté présente une flèche comprise entre 150 et 500 mm.

2. Vitrage feuilleté selon la revendication 1, **caractérisé en ce que** dans toutes les directions, l'épaisseur de la couche adhésive intercalaire est une fonction continue.

3. Vitrage feuilleté selon l'une des revendications précédentes, **caractérisé en ce que** dans une zone de bord du vitrage au moins, l'épaisseur de la couche adhésive intercalaire est croissante à distance croissante du bord du vitrage.

4. Vitrage feuilleté selon la revendication 3, **caractérisé en ce que** dans deux zones de bord opposées du vitrage, l'épaisseur de la couche adhésive intercalaire est croissante à distance croissante du bord du vitrage, ces deux zones de bord étant séparées par une zone à épaisseur constante de la couche adhésive intercalaire.

5. Vitrage feuilleté selon l'une des revendications précédentes, **caractérisé en ce que** sa longueur est comprise entre 1 et 2,5 m, et sa largeur entre 0,4 et 2 m.

6. Vitrage feuilleté selon l'une des revendications précédentes, **caractérisé en ce qu'**il présente un rayon de courbure minimal d'au plus 500 mm, ou un angle d'accostage d'au moins 35°.

7. Vitrage feuilleté selon l'une des revendications précédentes, **caractérisé en ce qu'**il est asymétrique.

8. Vitrage feuilleté selon l'une des revendications précédentes, **caractérisé en ce que** la couche adhésive intercalaire est asymétrique en épaisseur.

9. Véhicule de transport, bâtiment ou toute structure incorporant un vitrage feuilleté selon l'une des revendications précédentes, **caractérisé en ce que** l'épaisseur de la couche adhésive intercalaire n'est pas constante dans au moins deux zones de bord latérales sensiblement opposées du vitrage, dans sa position de montage.

10. Véhicule de transport, bâtiment ou toute structure selon la revendication 9, **caractérisé en ce que** le vitrage feuilleté présente, dans sa position de montage, un plan médian de symétrie vertical, et **en ce que** la corde reliant les deux points d'intersection de ce plan avec le bord du vitrage, est inclinée d'au moins 15 et au plus 90, de préférence 50° par rapport à l'horizontale.

11. Procédé de fabrication d'un vitrage feuilleté selon l'une des revendications 1 à 8, **caractérisé en ce qu'**il comprend la préparation par extrusion d'une couche adhésive intercalaire d'épaisseur non constante.

12. Procédé de fabrication d'un vitrage feuilleté selon l'une des revendications 1 à 8, **caractérisé en ce qu'**il comprend la préparation par thermoformage d'une couche intercalaire d'épaisseur non constante.

13. Application d'un vitrage feuilleté selon l'une des revendications 1 à 8 pour un véhicule de transport terrestre, aérien ou aquatique, notamment comme pare-brise, lunette arrière, vitre latérale ou toit de véhicule automobile, pour le bâtiment, le mobilier urbain, l'aménagement intérieur, l'électroménager, l'électronique.

## Patentansprüche

1. Verbundverglasung, die zwei durch eine Zwischenhaftschicht verbundene Glasscheiben enthält, die in der Montagestellung einen oberen Rand, einen unteren Rand und zwei Seitenränder aufweist, **dadurch gekennzeichnet, dass** sie seitliche Umbiegungen mit ausgeprägten Krümmungen mit Krümmungsradien von höchstens 500 mm aufweist, dass in der waagrechten Richtung in der Montagestellung die Dicke der Zwischenhaftschicht nacheinander zu- und abnimmt, und dass die Verbundverglasung eine Durchbiegung zwischen 150 und 500 mm aufweist.

2. Verbundverglasung nach Anspruch 1, **dadurch gekennzeichnet, dass** die Dicke der Zwischenhaftschicht in allen Richtungen eine durchgehende Funktion ist.

3. Verbundverglasung nach einem der vorhergehenden Ansprüche, **dadurch gekennzeichnet, dass** mindestens in einer Randzone der Verglasung die Dicke der Zwischenhaftschicht in zunehmendem Abstand zum Rand der Verglasung zunimmt.

4. Verbundverglasung nach Anspruch 3, **dadurch gekennzeichnet, dass** in zwei gegenüberliegenden Randzonen der Verglasung die Dicke der Zwischenhaftschicht in zunehmendem Abstand zum Rand der Verglasung zunimmt, wobei diese zwei Randzonen durch eine Zone mit konstanter Dicke der Zwischenhaftschicht getrennt sind.

5. Verbundverglasung nach einem der vorhergehenden Ansprüche, **dadurch gekennzeichnet, dass** ihre Länge zwischen 1 und 2,5 m und ihre Breite zwischen 0,4 und 2 m liegt.

6. Verbundverglasung nach einem der vorhergehenden Ansprüche, **dadurch gekennzeichnet, dass** sie einen minimalen Krümmungsradius von höchstens 500 mm oder einen Anlegewinkel von mindestens 35° aufweist.

7. Verbundverglasung nach einem der vorhergehenden Ansprüche, **dadurch gekennzeichnet, dass** sie asymmetrisch ist.

8. Verbundverglasung nach einem der vorhergehenden Ansprüche, **dadurch gekennzeichnet, dass** die Zwischenhaftschicht in der Dicke asymmetrisch ist.

9. Transportfahrzeug, Gebäude oder jede eine Verbundverglasung nach einem der vorhergehenden Ansprüche aufnehmende Struktur, **dadurch gekennzeichnet, dass** die Dicke der Zwischenhaftschicht in mindestens zwei im Wesentlichen gegenüberliegenden seitlichen Randzonen der Verglasung in ihrer Montagestellung nicht konstant ist.

10. Transportfahrzeug, Gebäude oder jede Struktur nach Anspruch 9, **dadurch gekennzeichnet, dass** die Verbundverglasung in ihrer Montagestellung eine senkrechte Symmetriemittelebene aufweist, und dass die die zwei Schnittpunkte dieser Ebene mit dem Rand der Verglasung verbindende Sehne um mindestens 15 und höchstens 90, vorzugsweise 50° bezüglich der Waagrechten geneigt ist.

11. Verfahren zur Herstellung einer Verbundverglasung nach einem der Ansprüche 1 bis 8, **dadurch gekennzeichnet, dass** es die Erzeugung durch Extrusion einer Zwischenhaftschicht nicht konstanter Dicke enthält.

12. Verfahren zur Herstellung einer Verbundverglasung nach einem der Ansprüche 1 bis 8, **dadurch gekennzeichnet, dass** es die Erzeugung durch Warmformen einer Zwischenschicht nicht konstanter Dicke enthält.

13. Anwendung einer Verbundverglasung nach einem der Ansprüche 1 bis 8 für ein Land-, Luft- oder Wassertransportfahrzeug, insbesondere als Windschutzscheibe, Heckfenster, Seitenfenster oder Dach eines Kraftfahrzeugs, für das Bauwesen, die Straßeneinrichtungen, die Inneneinrichtung, die Elektrohaushaltsgeräte, die Elektronik.

## Claims

1. Laminated glass panel comprising two sheets of glass connected by an adhesive interlayer, having, in the assembly position, an upper adge, a lower edge and two side edges, **characterized in that** it has side bends with pronounced curvatures having radii of curvature of at most 500 mm, **in that** in the horizontal direction in the assembly position, the thickness of the adhesive interlayer is sequentially increasing and decreasing and **in that** the laminated glass panel has a camber of between 150 and 500 mm.

2. Laminated glass panel according to Claim 1, **characterized in that** in all directions, the thickness of the adhesive interlayer is a continuous function.

3. Laminated glass panel according to either of the preceding claims, **characterized in that** in at least one edge zone of the glass panel, the thickness of the adhesive interlayer is increasing at increasing distance from the edge of the glass panel.

4. Laminated glass panel according to Claim 3, **characterized in that** in two opposite edge zones of the glass panel, the thickness of the adhesive interlayer is increasing at increasing distance from the edge of the glass panel, these two edge zones being separated by a zone of the adhesive interlayer having a constant thickness.

5. Laminated glass panel according to one of the preceding claims, **characterized in that** its length is between 1 and 2.5 m, and its width is between 0.4 and 2 m.

6. Laminated glass panel according to one of the preceding claims, **characterized in that** it has a minimum radius of curvature of not more than 500 mm, or a docking angle of at least 35°.
according to

7. Laminated glass panel according to one of the preceding claims, **characterized in that** it is asymmetrical.

8. Laminated glass panel according to one of the preceding claims, **characterized in that** the adhesive interlayer has an asymmetrical thickness.

9. Transport vehicle, building or any structure including a laminated glass panel according to one of the preceding claims, **characterized in that** the adhesive interlayer has a non-constant thickness in at least two substantially opposite side edge zones of the glass panel, in its assembly position.

10. Transport vehicle, building or any structure according to Claim 9, **characterized in that** the laminated glass panel, in its assembly position, has a vertical median plane of symmetry, and **in that** the chord connecting the two points of intersection of this plane with the edge of the glass panel, is inclined by at least 15 and not more than 90, preferably 50° to the horizontal.

11. Method for manufacturing a laminated glass panel according to one of Claims 1 to 8, **characterized in that** it comprises the preparation, by extrusion, of an adhesive interlayer having a non-constant thickness.

12. Method for manufacturing a laminated glass panel according to one of Claims 1 to 8, **characterized in that** it comprises the preparation, by thermo forming, of an adhesive interlayer having a non-constant thickness.

13. Use of a laminated glass panel according to one of Claims 1 to 8 for a land, air or sea transport vehicle, in particular as a windshield, rear window, side window or automobile roof, for buildings, street furniture, interior design, electrical home appliances, and electronics.
